# EUROPÄISCHE PATENTSCHRIFT

(11) **EP 0 614 058 B1**
(45) Veröffentlichungstag und Bekanntmachung des Hinweises auf die Patenterteilung: **17.09.1997**
(21) Anmeldenummer: 94890050.1
(22) Anmeldetag: 25.02.1994
(51) Int. Cl.: F24J 2/26, F24J 2/10, F24J 2/04, F24J 2/46

(54) **Vorrichtung zur Aufnahme von Sonnenenergie**
Device for collecting solar energy
Dispositif pour capter l'énergie solaire

(30) Priorität: 04.03.1993 AT 415/93
(43) Veröffentlichungstag der Anmeldung: 07.09.1994
(73) Patentinhaber: C.M.E. SCHWARZ HOLDINGGESELLSCHAFT M.B.H., A-6382 Kirchdorf im Tirol (AT)
(72) Erfinder: Schwarz, Alois, A-6382 Kirchdorf in Tirol (AT)
(74) Vertreter: Atzwanger, Richard, Dipl.-Ing. Patentanwalt

(56) Entgegenhaltungen:
- EP-A- 0 387 843
- EP-A- 0 524 165
- FR-A- 2 452 072
- FR-A- 2 548 455
- US-A- 4 151 829
- US-A- 4 340 034

## Beschreibung

Die gegenständliche Erfindung betrifft eine Vorrichtung zur Aufnahme von Sonnenenergie, nämlich einen Wärmekollektor, bestehend aus einem rahmenförmigen Gestell, an welchem unterhalb einer Abdeckung zwischen einem Verteilerrohr und einem Sammlerrohr mehrere Kollektorrohre, welche mit flügelartigen Kollektorelementen ausgebildet sind, angeordnet sind, wobei die Kollektorrohre verdrehbar gelagert sind, wodurch die Kollektorelemente dem Sonnenstand nachführbar sind.

Aus der EP 524 165 A1 ist ein mit verschwenkbaren Kollektorelementen ausgebildeter Wärmekollektor bekannt, bei welchem die Kollektorelemente zur Erzielung einer optimalen Aufnahme der Sonnenenergie dem Sonnenstand nachführbar sind, wodurch die Sonnenstrahlen auf die Kollektorelemente im rechten Winkel auftreffen. Diese bekannte Vorrichtung ist jedoch deshalb nachteilig, da die Kollektorelemente in derjenigen Lage, in welcher sie sich in der Ebene der Vorrichtung befinden, unmittelbar aneinander anschließend angeordnet sind, weswegen bei niedrigem Sonnenstand, bei welchem die Kollektorelemente gegenüber der gesamten Vorrichtung schräg ausgerichtet sind, Bereiche der Kollektorelemente durch die in Einfallsrichtung der Wärmestrahlung davor liegenden Kollektorelemente abgeschattet werden, wodurch von den abgeschatteten Bereichen keine Sonnenenergie aufgenommen werden kann. Da hierdurch weiters die von den nicht abgeschatteten Bereichen aufgenommene Sonnenenergie in die abgeschatteten Bereiche der Kollektorelemente abströmt und demnach nicht über die Kollektorrohre abgeführt wird, weisen diese bekannten Sonnenkollektoren jedenfalls bei tiefem Sonnenstand einen nur sehr schlechten Wirkungsgrad auf.

Aus der US-PS 4 340 034 ist gleichfalls ein Sonnenkollektor bekannt, welcher mit einem Reflektor ausgebildet ist. Dieser bekannte Sonnenkollektor setzt jedoch deshalb, da sich die Kollektorelemente innerhalb der schalenförmig gewölbten Reflektoren befinden, Mindestwinkel der Sonneneinstrahlung voraus, da andernfalls die Kollektorelemente zumindest teilweise nicht mehr bestrahlt werden.

Der gegenständlichen Erfindung liegt demgegenüber die Aufgabe zugrunde, einen Wärmekollektor zu schaffen, welcher unabhängig vom Sonnenstand einen optimalen Wirkungsgrad gewährleistet. Dies wird erfindungsgemäß dadurch erzielt, daß die Kollektorelemente auf beiden Seiten mit einer Wärme absorbierenden Beschichtung ausgebildet sind und in Richtung der eingestrahlten Sonnenenergie unter den Kollektorelementen Reflektoren angeordnet sind, durch welche die zwischen den Kollektorelementen eingestrahlte und von deren Vorderseiten nicht aufgenommene Wärmestrahlung auf deren Rückseiten reflektiert wird, und daß sich die Drehachsen der Kollektorrohre oberhalb der Reflektoren befinden und sich voneinander in einem solchen Abstand befinden, daß auch bei niedrigstem Sonnenstand keine Abschattung derselben durch einen Reflektorteil oder durch ein daneben befindliches Kollektorelemente bedingt wird.

Dadurch, daß die nebeneinander befindlichen Kollektorelemente in einem hierfür ausreichenden Abstand voneinander angeordnet sind, ist auch bei niedrigstem Sonnenstand gewährleistet, daß keine Abschattung von Bereichen der Kollektorelemente erfolgt, wodurch die gesamte auf dieselben gelangende Sonnenergie über die Kollektorrohre abgeführt wird. Soferne jedoch bei mittlerem oder hohem Sonnenstand Sonnenenergie zwischen den voneinander im Abstand befindlichen Kollektorelementen eingestrahlt wird, gelangt diese über die Reflektoren auf die Rückseiten der Kollektorelemente, welche gleichfalls mit einer Wärme absorbierenden Beschichtung ausgebildet sind, wodurch bei jedem Sonnenstand die gesamte eingestrahlte Sonnenenergie von den Kollektorelementen aufgenommen wird.

Vorzugsweise befindet sich zwischen nebeneinander befindlichen Kollektorelementen ein Zwischenraum, welcher der Breite der Kollektorelemente angenähert gleich ist.

Weiters sind vorzugsweise die Reflektoren in an sich bekannter Weise im Querschnitt angenähert kreisbogenförmig konkav gewölbt. Dadurch, daß somit die Reflektoren nach Art von Parabolspiegeln ausgebildet sind, wird gewährleistet, daß die zwischen den Kollektorelementen eingestrahlte Energie nahezu vollständig auf die Rückseiten der Kollektorelemente reflektiert wird.

Bei bekannten Wärmekollektoren besteht weiters das Problem, daß die Kollektorelemente sich in der Ebene der Kollektorrohre befinden, wobei diese Wärmekollektoren zur Erzielung einer optimalen Einstrahlung der Sonnenenergie in einem Winkel von etwa 60° gegenüber der Horizontalen aufgestellt werden müssen. Soferne jedoch derartige Vorrichtungen auf Dächern angeordnet werden, wobei das Erfordernis besteht, diese in der Dachneigung zu montieren, wird hierdurch keine optimale Einstrahlung gewährleistet. Der gegenständlichen Erfindung liegt demnach weiters die Aufgabe zugrunde, eine derartige Vorrichtung zu schaffen, durch welche unabhängig von der Neigung des Daches, auf welchem diese montiert ist, eine maximale Einstrahlung der Sonnenenergie gewährleistet ist. Dies wird erfindungsgemäß dadurch erzielt, daß die Kollektorelemente eine Vielzahl von Teilflächen aufweisen, welche mit der Achse der Kollektorrohre in einem spitzen Winkel von 10° bis 45° stehen.
Hierdurch können Wärmekollektoren geschaffen werden, bei welchen unabhängig davon, welche Neigung die Dachfläche, auf welcher sie montiert werden, aufweist, die Kollektorflächen sich in einem Winkel von etwa 60° zur Horizontalen befinden, wodurch eine optimale Einstrahlung der Sonnenenergie gewährleistet ist.

Bei derartigen Wärmekollektoren tritt weiters auch das Problem auf, daß bei sehr starker Einstrahlung von Sonnenenergie eine Überhitzung bedingt werden kann. Bei bekannten Kollektoren sind zur Verschwenkung der Kollektorelemente, um diese dem Sonnenstand nachzuführen, auf der Vorderseite mindestens eines Kollektorelementes zwei Photozellen angeordnet, deren Ausgangssignale an eine einen Komparator enthaltende Steuerschaltung gelegt sind. Durch diese Steuerschaltung erfolgt eine Steuerung der Verschwenkung der Kollektorelemente dahingehend, daß sie im rechten Winkel zu den einfallenden Sonnenstrahlen stehen. Sobald die im Kollektor herrschende Temperatur über einen vorgegebenen Wert ansteigt, wird durch einen Wärmefühler ein Steuersignal abgegeben, wodurch dahingehend eine Umsteuerung erfolgt, daß die Kollektorelemente, welche nur auf einer Seite mit einer Wärme absorbierenden Schichte ausgebildet sind, um 180° verschwenkt werden.

Hierdurch wird in weiterer Folge von den Kollektorelementen keine Sonnenenergie mehr aufgenommen, wodurch eine Überhitzung des Kollektors ausgeschlossen wird.

Diese bekannte Technologie ist jedoch beim erfindungsgemäßen Wärmekollektor deshalb nicht anwendbar, da bei diesem die flügelartigen Kollektorelemente auf beiden Seiten mit einer Wärme absorbierenden Beschichtung ausgebildet sind. Um dessen ungeachtet eine Überhitzung des Kollektors ausschließen zu können, ist auf der Rückseite eines der Kollektorelemente eine weitere Photozelle angeordnet, deren Ausgang gleichfalls an die Steuerschaltung gelegt ist. Hierdurch werden die Kollektorelemente parallel zur Sonnenstrahlung ausgerichtet. Da hierdurch auf die Kollektorelemente nahezu keine Sonnenenergie gelangt, wird eine Überhitzung des Kollektors ausgeschlossen.

Bei bekannten Wärmekollektoren besteht weiters die Schwierigkeit, daß sich oberhalb der Abdeckung eine Eisschichte ausbilden kann, durch welche die Einstrahlung von Sonnenenergie auf die Kollektorelemente stark herabgesetzt wird. Um ein Abgleiten dieser Eisschichte zu ermöglichen, kann das Traggestell an seinen Seitenrändern mit einem Kanal für ein von einem Wärmeträger durchströmtes Rohr oder für eine elektrische Heizleitung ausgebildet sein. Durch die Beheizung der vertikal verlaufenden Ränder des Traggestelles wird in diesen Bereichen ein Aufschmelzen einer auf der Abdeckung befindlichen Eisschichte bewirkt, wodurch diese von der Abdeckung abgleiten kann.

Bei den bekannten Wärmekollektoren besteht weiters auch die Schwierigkeit der Abdichtung der Kollektorrohre gegenüber dem Verteilerrohr sowie dem Sammlerrohr unter Berücksichtigung dessen, daß die Kollektorrohre gegenüber dem Verteilerrohr und dem Sammlerrohr verdrehbar sind und daß sie weiters in axialer Richtung Wärmebewegungen ausführen. Es ist bekannt, die Lager durch O-Ringe abzudichten. Die bekannten Abdichtungen entsprechen jedoch deshalb nicht den Anforderungen, da einerseits bei der Montage und vor der Inbetriebnahme des Wärmekollektors sehr hohe Temperaturen auftreten können und andererseits das beim Betrieb des Kollektors im Wärmeträger enthaltene Glykol sehr agressiv ist. Es ist jedoch kein Material bekannt, welches sowohl gegen Hitze und heiße Luft als auch gegenüber einem Glykolgemisch hinreichend beständig ist, um in sämtlichen Betriebsfällen die erforderliche Dichtung zu bewirken.

Der gegenständlichen Erfindung liegt demnach auch die Aufgabe zugrunde, eine in allen Betriebsfällen wirksame Dichtung der Kollektorrohre gegenüber dem Verteilerrohr und dem Sammlerrohr zu schaffen. Dies wird erfindungsgemäß dadurch erzielt, daß die Abdichtung der Lager der Kollektorrohre gegenüber dem Verteilerrohr bzw. gegenüber dem Sammlerrohr mittels einer Einrichtung erfolgt, welche durch einen axial beweglichen Simmerring und eine an diesen anschließende Scheibe gebildet ist, wobei der zwischen dem Simmerring und der Scheibe befindliche Raum durch Silikonfett ausgefüllt ist und vorzugsweise axial außerhalb des Simmerringes und der Dichtungsscheibe jeweils ein O-Ring angeordnet ist.

Die Dichtungsfunktion wird dabei dadurch erfüllt, daß der Raum, welcher sich zwischen der Scheibe und dem Simmerring befindet, mit Silikonfett gefüllt ist, welches gegenüber hohen Temperaturen und gegenüber Glykol resistent ist, wodurch die erforderliche Abdichtung sowohl vor Inbetriebnahme als auch während des Betriebes des Wärmekollektors gewährleistet ist. Weiters wird durch diese Fettfüllung der Simmerring nicht angegriffen. Durch die O-Ringe, welche aus beliebigen verformbaren Materialien, z.B. aus Asbest oder auch aus einem metallischen Werkstoff, gefertigt sein können, wird verhindert, daß das Silikonfett ausgespült wird.

Vorzugsweise sind weiters auf der Vorderseite der Kollektorelemente photovoltaische Elemente angeordnet.

Der Gegenstand der Erfindung ist nachstehend anhand eines in der Zeichnung dargestellten Ausführungsbeispiels näher erläutert. Es zeigen:
- Fig. 1: einen erfindungsgemäßen Wärmekollektor, in vereinfachter axonometrischer Darstellung,
- die Fig.2a bis 2c: den erfindungsgemäßen Wärmekollektor bei unterschiedlichen Schwenklagen der Kollektorelemente, jeweils im Querschnitt,
- Fig. 3: eine zweite Ausführungsform eines erfindungsgemäßen Wärmekollektors, im Querschnitt,
- Fig. 4: eine dritte Ausführungsform eines erfindungsgemäßen Wärmekollektors, in axonometrischer Darstellung,
- Fig. 5: den Wärmekollektor nach Fig.4, im Querschnitt,
- Fig. 6: einen erfindungsgemäßen Wärmekollektor, im Längschnitt, und
- Fig. 7: ein Detail der Fig.6 im Schnitt.

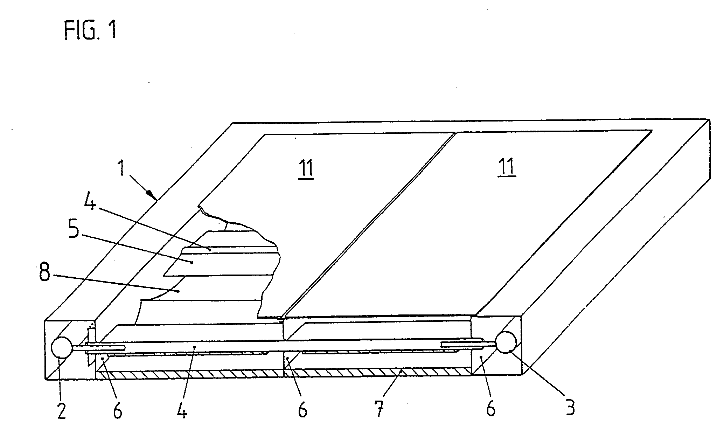

Wie dies aus Fig.1 ersichtlich ist, weist ein anmeldungsgemäßer Sonnenkollektor ein Gehäuse 1 auf, welches an seiner Oberseite mit einer Abdeckung 11 aus einem für Wärmestrahlung durchlässigem Material versehen ist. Innerhalb des Gehäuses 1 befinden sich ein Verteilerrohr 2 und ein Sammlerrohr 3, zwischen welchen Kollektorrohre 4, an welchen flügelartige Kollektorelemente 5 befestigt sind, vorgesehen sind. Die Kollektorrohre 4 durchsetzen Ausnehmungen von parallel zu den Rohren 2 und 3 ausgerichteten Stegblechen 6, wobei sie in den Ausnehmungen gelagert sind. An der Unterseite des Gehäuses 1 sind eine Isolierschichte 7 und darüber ein Reflektor 8 angeordnet.

Vom Verteilerrohr 2 gelangt ein Wärmeträger in die Kollektorrohre 4, in welchen er von den Kollektorelementen 5 absorbierte Sonnenenergie aufnimmt und welcher über das Sammlerrohr 3 zu einem Wärmetauscher abströmt.

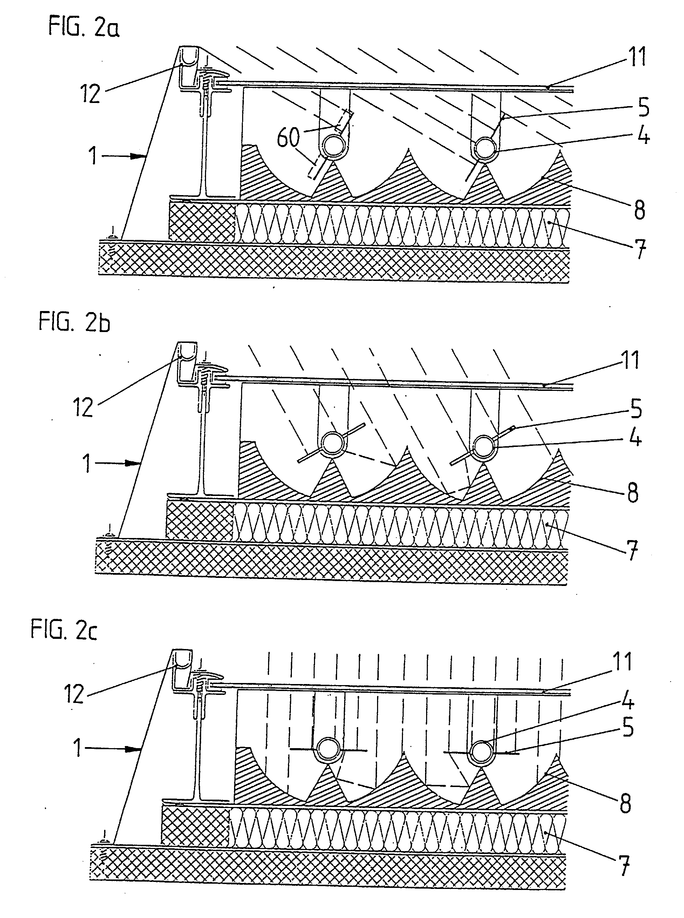

Wie dies aus den Fig.2a, 2b und 2c ersichtlich ist, befinden sich die Kollektorrohre 4 seitlich nebeneinander in solchen Abständen, daß auch bei sehr tiefem Sonnenstand, welcher in Fig.2a dargestellt ist, gewährleistet ist, daß auf sämtliche Bereiche Kollektorelemente 5 Sonnenstrahlen und damit Sonnenenergie gelangt. Hierdurch werden Abschattungen von Bereichen der Kollektorelemente 5, welche einen schlechten Wirkungsgrad bedingen würden, vermieden.

Die einzelnen Kollektorrohre 4 befinden sich dabei voneinander in einem solchen Abstand, welcher der doppelten Breite der Kollektorelemente 5 angenähert gleich ist.

Um jedoch auch bei einem höheren Sonnenstand, bei welchem Sonnenstrahlen zwischen den einzelnen Kollektorelementen 5 einfallen, auch die durch diese eingestrahlte Wärme zu erfassen, sind in Einfallsrichtung der Strahlen hinter den Kollektorelementen 5 parabolspiegelartige Reflektoren 8 vorgesehen und sind die Kollektorelemente 5 auf ihren beiden Seiten mit einer Wärme absorbierenden Beschichtung ausgebildet. Hierdurch werden die zwischen den Kollektorelementen 5 einfallenden Sonnenstrahlen durch die Reflektoren 8 auf die Rückseiten der Kollektorelemente 5 reflektiert, wie dies in den Fig.2b und 2c dargestellt ist, und werden sie an den Rückseiten absorbiert. Hierdurch weisen diese Wärmekollektoren einen sehr hohen Wirkungsgrad auf.

Als Kollektorelemente können solche verwendet werden, welche mit einer metallischen Beschichtung mit einer Dicke von weniger als 2 µ ausgebildet. Durch diese geringe Dicke der Beschichtung wird gewährleistet, daß auch diffuse Lichtstrahlung in Wärmeenergie umgewandelt wird. Diese Wärmeenergie gelangt von den Kollektorelementen 5 zu den Kollektorrohren 4 und wird von diesen an den die Kollektorrohre 4 durchströmenden Wärmeträger abgegeben.

Weiters können an der Vorderseite der Kollektorelemente 5 photovoltaische Elemente 60 vorgesehen sein, wie dies in Fig.2a strichliert dargestellt ist, wodurch mittels eines erfindungsgemäßen Wärmekollektors auch elektrischer Strom erzeugt werden kann. Da durch den die Kollektorrohre 4 durchströmenden Wärmeträger die erforderliche Kühlung bewirkt wird, weisen die photovoltaischen Elemente 60 einen sehr hohen Wirkungsgrad auf.

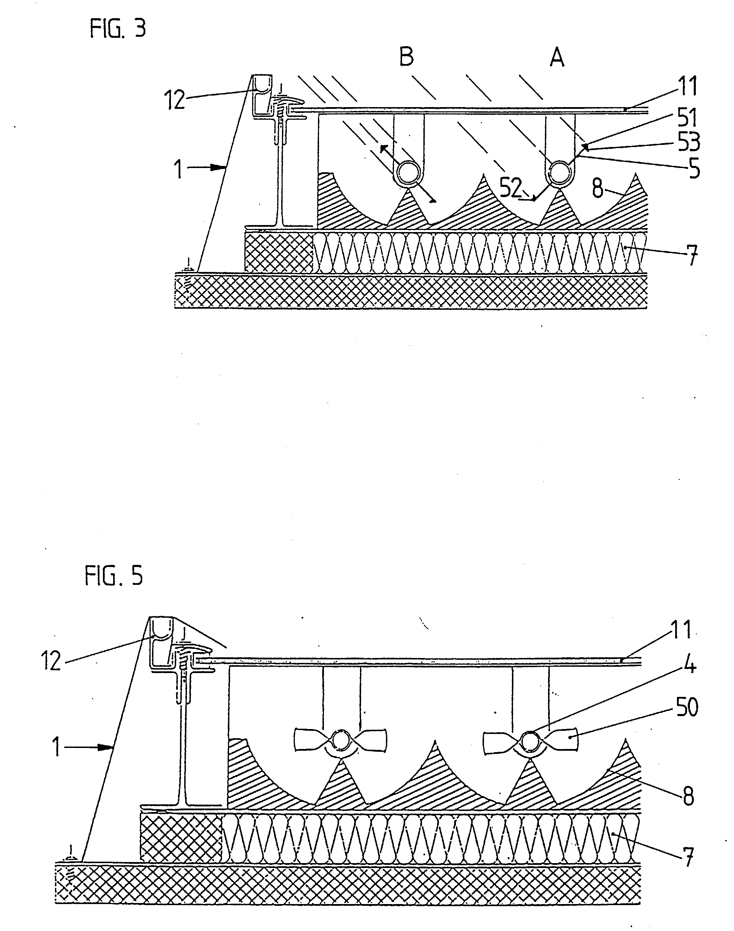

Wie dies in Fig.3 dargestellt ist, ist es bei derartigen Wärmekollektoren bekannt, zur Vermeidung von Überhitzungen an der Vorderseite mindestens eines der Kollektorelemente 5 zwei Photozellen 51 und 52 anzuordnen, deren Ausgänge an eine Steuerschaltung mit einem Komparator gelegt sind. Weiters ist ein Wärmefühler vorgesehen, durch welchen dann an die Steuerschaltung ein Ausgangssignal abgegeben wird, sobald die im Wärmekollektor herrschende Temperatur einen vorgegebenen Wert überschreitet.
Sobald der vorgegebene Temperaturwert überschritten wird, wird durch die Steuerschaltung eine Verschwenkung der Kollektorelemente 5 derart bewirkt, daß diese um 180° verdreht werden, wodurch von ihnen keine Wärmeenergie mehr aufgenommen wird.

Da jedoch beim erfindungsgemäßen Wärmekollektor beide Seiten der Kollektorelemente 5 mit einer Wärme absorbierenden Beschichtung ausgebildet sind, wodurch Wärmeenergie auch nach deren Verschwenkung um 180° aufgenommen werden würde, ist auf der Rückseite des Kollektorelementes 5 eine dritte Photozelle 53 vorgesehen, durch welche zur Vermeidung von Überhitzungen eine Steuerung in der Verschwenkung der Kollektorelemente 5 aus der Stellung A in eine Stellung B dahingehend erfolgt, daß die Kollektorelemente 5 parallel zur Einstrahlung ausgerichtet sind. Hierdurch wird von diesen in weiterer Folge nahezu keine Wärmeenergie mehr aufgenommen.

Aus den Fig.2 und 3 ist weiters ersichtlich, daß der Wärmekollektor 1 an seinen seitlichen Rändern mit einer kanalförmigen Leiste 12 zur Aufnahme eines Schlauches oder eines elektrischen Heizelementes ausgebildet ist, wodurch die vertikal verlaufenden Ränder der Abdeckung 11 beheizbar sind, um dann, wenn sich auf der Abdeckung 11 eine Eisschichte gebildet hat, diese längs der vertikalen Ränder aufzuschmelzen, wodurch die Eisschichte nach unten abgleiten kann.

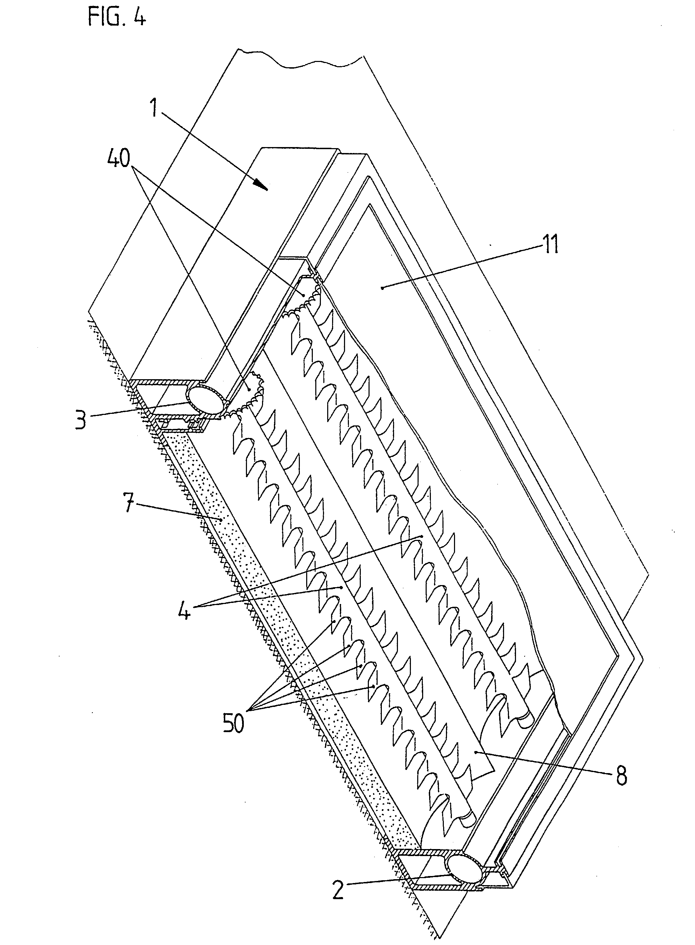

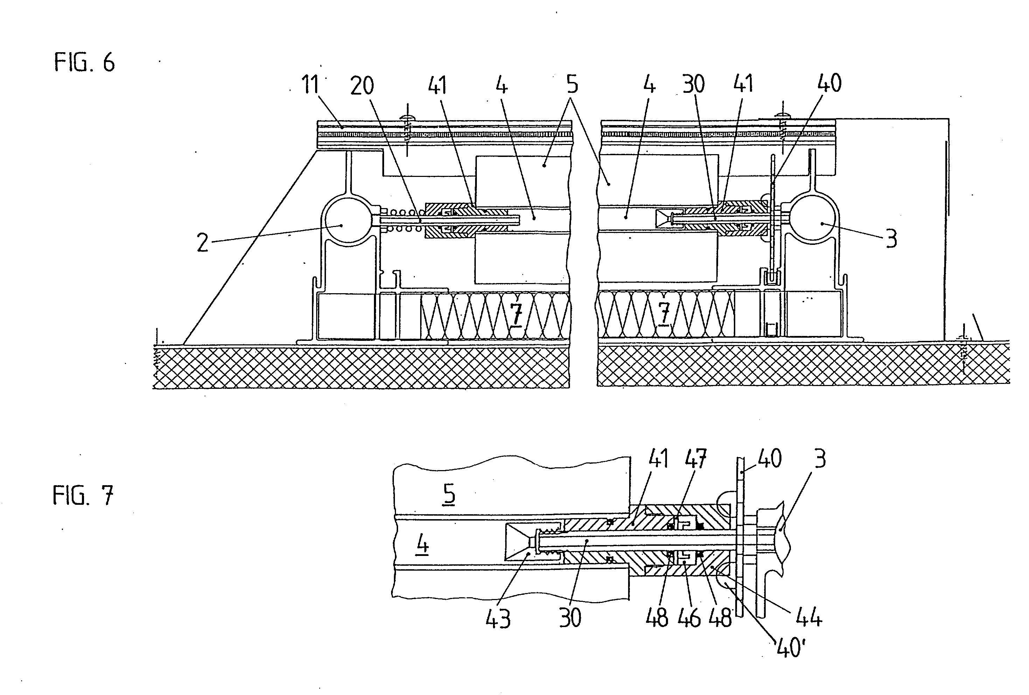

In den Fig.4 und 5 ist weiters ein Wärmekollektor 1 dargestellt, bei welchem die Kollektorrohre 4 mit einer Vielzahl von Kollektorelementen 50 ausgebildet sind, welche mit den Kollektorrohren 4 einen Winkel von 10° bis 45° einschließen. Hierdurch können derartige Wärmekollektoren in der Ebene von Dächern, welche zur Horizontalen einen Winkel von 30° bis 50° einschließen, angeordnet werden, wobei dann die Kollektorflächen gegenüber der Horizontalen in einem Winkel von 60° stehen, wodurch eine optimale Aufnahme der eingestrahlten Wärmeenergie gewährleistet ist.

Wie dies aus Fig.4 ersichtlich ist, sind die Kollektorrohre 4 mit gezahnten Rädern 40 ausgebildet, durch welche die Kollektorelemente 50 mittels einer Kette dem Sonnenstand nachgestellt werden können.

Wie dies aus Fig.6 ersichtlich ist, gehen vom Verteilerrohr 2 mit diesem fest verbundene Anschlußrohre 20 aus, welche in das zugeordnete Kollektorrohr 4 einragen. Ebenso gehen vom Sammlerrohr 3 Anschlußrohre 30 aus, welche gleichfalls in die Kollektorrohre 4 einragen. Die abdichtende Verbindung zwischen dem Kollektorrohr 4 sowie den zugeordneten Anschlußrohren 20 und 30 ist dadurch bewirkt, daß in das Kollektorrohr 4 Rohrstücke 41 eingesetzt sind, welche mit diesem, z.B. durch Klebung fest verbunden sind.

Wie dies in Fig.7 dargestellt ist, ist das Rohrstück 41 an seinem einen Ende mit einem Gewinde ausgebildet, auf welches eine Düse 43 aufgeschraubt ist. Hierdurch wird eine geschlitzte Hülse 44 an das Stellrad 40 angepreßt. Um die erforderliche Abdichtung zwischen den Rohrstücken 20 bzw. 30 und dem Kollektorrohr 4 zu bewirken, befinden sich auf jedem Rohrstück 20 bzw. 30 ein Simmerring 46 und anliegend eine Dichtungsscheibe 47, wobei der zwischen dem Simmerring 46 und der Dichtungsscheibe 47 befindliche Raum mittels Silikonfett angefüllt ist. Außerhalb des Simmerringes 46 und der Dichtungsscheibe 47 sind weiters O-Ringe 48 vorgesehen. Das Stellrad 40 ist mit Mitnehmern 40' ausgebildet, welche an die Kollektorelemente 5 zur Anlage kommen, wodurch diese verschwenkt werden können.

Die eigentliche Abdichtung erfolgt durch das Silikonfett, welches sich zwischen dem Simmerring 46 und der Dichtungsscheibe 47 befindet, wobei durch die O-Ringe 48 ein mechanischer Schutz gegen ein Ausspülen des Silikonfettes bewirkt wird.

## Patentansprüche

1. Vorrichtung zur Aufnahme von Sonnenenergie, nämlich Wärmekollektor, bestehend aus einem rahmenförmigen Gestell, an welchem unterhalb einer Abdeckung (11) zwischen einem Verteilerrohr (2) und einem Sammlerrohr (3) mehrere Kollektorrohre (4), welche mit flügelartigen Kollektorelementen (5) ausgebildet sind, angeordnet sind, wobei die Kollektorrohre (4) verdrehbar gelagert sind, wodurch die Kollektorelemente (5) dem Sonnenstand nachführbar sind, dadurch gekennzeichnet, daß die Kollektorelemente (5) auf beiden Seiten mit einer Wärme absorbierenden Beschichtung ausgebildet sind und in Richtung der eingestrahlten Sonnenenergie unter den Kollektorelementen (5) Reflektoren (8) angeordnet sind, durch welche die zwischen den Kollektorelementen (5) eingestrahlte und von deren Vorderseiten nicht aufgenommene Wärmestrahlung auf deren Rückseiten reflektiert wird, und daß sich die Drehachsen der Kollektorrohre (4) oberhalb der Reflektoren (8) befinden und sich voneinander in einem solchen Abstand befinden, daß auch bei niedrigstem Sonnenstand keine Abschattung derselben durch einen Reflektorteil oder durch ein daneben befindliches Kollektorelement (5) bedingt wird.

2. Vorrichtung nach Patentanspruch 1, dadurch gekennzeichnet, daß sich zwischen nebeneinander befindlichen Kollektorelementen (5) ein Zwischenraum befindet, welcher der Breite der Kollektorelemente (5) angenähert gleich ist.

3. Vorrichtung nach einem der Patentansprüche 1 und 2, dadurch gekennzeichnet, daß die Reflektoren (8) in an sich bekannter Weise im Querschnitt angenähert kreisbogenförmig konkav gewölbt sind.

4. Vorrichtung nach einem der Patentansprüche 1 bis 3, dadurch gekennzeichnet, daß die Kollektorelemente (5) eine Vielzahl von Teilflächen (50) aufweisen, welche mit der Achse der Kollektorrohre (4) in einem spitzen Winkel zu 10° bis 45° stehen.

5. Vorrichtung nach einem der Patentansprüche 1 bis 4, wobei mindestens eines der Kollektorelemente (5) an seiner Vorderseite mit zwei Photozellen (51, 52) ausgebildet ist, weiters ein Wärmefühler vorgesehen ist und die Ausgänge der Photozellen (51, 52) sowie des Wärmefühlers an eine Steuerschaltung mit einem Komparator gelegt sind, dadurch gekennzeichnet, daß an der Rückseite des Kollektorelementes (5) eine weitere Photozelle (53) angeordnet ist, deren Ausgang gleichfalls an die Steuerschaltung gelegt ist.

6. Vorrichtung nach einem der Patentansprüche 1 bis 5, dadurch gekennzeichnet, daß das Gestell an seinen Seitenrändern mit einem Kanal (12) für ein von einem Wärmeträger durchströmtes Rohr oder für eine elektrische Heizleitung ausgebildet ist.

7. Vorrichtung nach einem der Patentansprüche 1 bis 6, dadurch gekennzeichnet, daß die Abdichtung der Lager der Kollektorrohre (5) gegenüber dem Verteilerrohr (2) bzw. gegenüber dem Sammlerrohr (3) mittels einer Einrichtung erfolgt, welche durch einen axial beweglichen Simmerring (46) und eine an diesen anschließende Scheibe (47), wobei der zwischen dem Simmerring (46) und der Scheibe (47) befindliche Raum mittels Silikonfett ausgefüllt ist, gebildet ist, wobei vorzugsweise axial außerhalb des Simmerringes (46) und der Dichtungsscheibe (47) jeweils ein O-Ring (48) angeordnet ist.

8. Vorrichtung nach einem der Patentansprüche 1 bis 7, dadurch gekennzeichnet, daß auf der Vorderseite der Kollektorelemente (5) photovoltaische Elemente (60) angeordnet sind.

## Claims

1. A device for absorbing energy from the sun, i.e. a thermal collector, comprising a frame-type mounting, on which there are arranged, under a covering (11) between a distributing tube (2) and an accumulator tube (3), a plurality of collector tubes (4) which are constructed with vane-type collector elements (5), the collector tubes (4) being rotatably mounted, whereby the collector elements (5) may follow the position of the sun, characterised in that the collector elements (5) are constructed on both sides with a heat-absorbing coating and in that reflectors (8) are arranged below the collector elements (5) in the direction of the sun's irradiated energy, by which reflectors (8) the thermal radiation irradiated between the collector elements (5) and not absorbed by the front faces thereof is reflected onto the rear faces thereof, and in that the axes of rotation of the collector tubes (4) are located above the reflectors (8) and are so spaced from each other that, even when the sun is in its lowest position, no shadows thereof are cast by a reflector component or by a collector element (5) located adjacent thereto.

2. A device according to claim 1, characterised in that an interspace is located between adjacent collector elements (5), which interspace is approximately equal to the width of the collector elements (5).

3. A device according to either one of claims 1 and 2, characterised in that the reflectors (8) are concavely curved in a manner known per se so that their cross-section is approximately in the form of an arc of a circle.

4. A device according to any one of claims 1 to 3, characterised in that the collector elements (5) comprise a plurality of partial surfaces (50), which are positioned at an acute angle of from 10° to 45° to the axis of the collector tubes (4).

5. A device according to any one of claims 1 to 4, the front of at least one of the collector elements (5) being constructed with two photoelectric cells (51, 52), a heat sensor further being provided and the outputs of the photoelectric cells (51, 52) and of the heat sensor being connected to a control circuit with a comparator, characterised in that another photoelectric cell (53) is arranged on the back of the collector element (5), the output of which is also connected to the control circuit.

6. A device according to any one of claims 1 to 5, characterised in that the mounting is constructed at its side edges with a channel (12) for a tube through which there flows a heat transfer medium or for an electrical heat conductor.

7. A device according to any one of claims 1 to 6, characterised in that sealing of the bearings of the collector tubes (5) with respect to the distributor tubes (2) or with respect to the accumulator tube (3) is effected by means of a device which is formed by an axially movable sealing ring (46) and a washer (47) adjacent thereto, the space between the sealing ring (46) and the washer (47) being filled with silicone grease, an O-ring (48) preferably being arranged axially externally of the sealing ring (46) and the sealing washer (47).

8. A device according to any one of claims 1 to 7, characterised in that photovoltaic elements (60) are arranged on the front faces of the collector elements (5).

## Revendications

1. Dispositif destiné à capter de l'énergie solaire, en particulier collecteur thermique, constitué d'un bâti en forme de cadre, sur lequel sont placés, au-dessous d'une couverture (11), entre un tube de distribution (2) et un tube de collecte (3), plusieurs tubes de collecteur (4), qui comportent des éléments de collecteur (6) du type d'ailettes, les tubes de collecteur (4) étant montés tournants, ce qui fait que les éléments de collecteur (5) peuvent suivre la position du soleil, caractérisé en ce que les éléments de collecteur (5) présentent, sur les deux faces, un revêtement absorbant la chaleur et, en direction de l'énergie solaire émise, sont placés, sous les éléments de collecteur (5), des réflecteurs (8), par lesquels le rayonnement thermique, émis entre les éléments de collecteur (5) et non absorbé par leurs faces avant, est réfléchi sur leurs faces arrière, et en ce que les axes de rotation des tubes de collecteur (4) se trouvent au-dessus des réflecteurs (8) et se trouvent à une distance les uns des autres telle que même lorsque le soleil est dans sa position la plus basse, une partie de réflecteur ou un élément de collecteur (5) se trouvant à côté ne fasse de l'ombre à ceux-ci.

2. Dispositif selon la revendication 1, caractérisé en ce qu'entre des éléments de collecteur (5) se trouvant côte à côte, se trouve un espace intermédiaire, qui est à peu près égal à la largeur des éléments de collecteur (5).

3. Dispositif selon l'une des revendications 1 et 2, caractérisé en ce que les réflecteurs (8) sont d'une section transversale concave, approximativement en arc de cercle, de manière connue en soi.

4. Dispositif selon l'une des revendications 1 à 3, caractérisé en ce que les éléments de collecteur (5) présentent un grand nombre de surfaces partielles (50), qui forment un angle aigu de 10 à 45°, avec l'axe des tubes de collecteur (4).

5. Dispositif selon l'une des revendications 1 à 4, dans lequel au moins l'un des éléments de collecteur (5) présente sur sa face avant deux cellules photo-électriques (51, 52), en outre une sonde thermique est prévue et les sorties des cellules photo-électriques (51, 52) ainsi que de la sonde thermique sont reliées à un circuit de commande avec un comparateur, caractérisé en ce que sur la face arrière de l'élément de commande (5) est placée une autre cellule photo-électrique (53), dont la sortie est également raccordée au circuit de commande.

6. Dispositif selon l'une des revendications 1 à 5, caractérisé en ce que le bâti (1) présente, sur ses bords latéraux, un canal (12) pour un tube traversé par un caloporteur ou pour une ligne de chauffage électrique.

7. Dispositif selon l'une des revendications 1 à 6, caractérisé en ce que l'étanchéité des paliers des tubes de collecteur (5) par rapport au tube de distribution (2) ou par rapport au tube de collecte (3), s'effectue au moyen d'un dispositif, qui est formé par une bague à lèvres avec ressort (46), mobile axialement et une rondelle (45), se rattachant à celle-ci, l'espace se trouvant entre la bague à lèvres (46) et la rondelle (47) étant rempli au moyen de graisse de silicone, un joint torique (48) étant de préférence placé axialement à l'extérieur de la bague à lèvres (46) et de la rondelle d'étanchéité (47).

8. Dispositif selon l'une des revendications 1 à 7, caractérisé en ce que des éléments photovoltaïques (60) sont placés sur la face avant des éléments de collecteur (5).
